# EUROPEAN PATENT APPLICATION

(11) **EP 2 602 858 A1**
(43) Date of publication of application: **12.06.2013**
(21) Application number: 11814692.7
(22) Date of filing: 04.08.2011
(51) Int. Cl.: H01M 10/50, H01M 2/10

(54) **BATTERY PACK**

(30) Priority: 06.08.2010 JP 2010177890
(71) Applicant: Kabushiki Kaisha Toyota Jidoshokki, Kariya-shi, Aichi 448-8671 (JP)
(72) Inventor: WATANABE, Shintaro, Kariya-shi Aichi 448-8671 (JP); KUBO, Hidehito, Kariya-shi Aichi 448-8671 (JP)
(74) Representative: TBK
(86) International application number: PCT/JP2011/067836
(87) International publication number: WO 2012/018067

(57) **Abstract**

Provided is a battery pack which includes a plurality of battery cases and passage formation members. Each battery case has an inlet for sucking in operating fluid and an outlet for discharging operating fluid. The passage formation members extend along the direction in which the plurality of battery cases are arranged in parallel, and are arranged so as to face the inlets. The passage formation members comprise: a flow passage, a plurality of introduction openings, a closed section, and an adhesion member. The flow passage allows operating fluid to circulate along the direction in which the battery cases are arranged in parallel. The introduction openings introduce operating fluid from the flow passage to each of the battery case inlets. The closed section is arranged between adjacent introduction openings, and blocks off the spillage of operating fluid from the flow passage toward the intervals between battery cases that are adjacent in the parallel-arrangement direction. The adhesion member has plasticity and is adhered to the outer surfaces of the plurality of battery cases. The adhesion member is adhered to the passage formation members so as to surround each introduction opening.

## Description

### TECHNICAL FIELD

The present invention relates to a battery pack installed in an electric vehicle or a hybrid vehicle.

### BACKGROUND ART

An example of a battery for an electric vehicle includes, for instance, a plurality of tetragonal battery cells and a battery case, which accommodates the battery cells. A battery pack integrating a plurality of such batteries is installed in an electric vehicle. Since the battery pack is sealed and stored in a void located below the floor of the vehicle body, temperature adjustment (e.g., cooling) of the battery cell is required. Patent document 1 describes an example of a structure that allows for temperature adjustment of the battery cell.

The battery structure of patent document 1 includes a plurality of batteries accommodated in a battery frame. The battery case of a battery includes an upper wall and a lower wall having a plurality of vent holes. A ventilation passage is defined between a lower surface of each battery case and an upper surface of a bottom portion of the battery frame. Further, the battery frame has a front portion including an air inlet. A rear portion of an upper cover arranged above each battery case includes an air outlet provided with a fan.

Cooling air (operational fluid), which is drawn into the ventilation passage through the air inlet, flows through each battery case from lower vent holes toward upper vent holes of the battery case. The cooling air cools (adjusts the temperature of) the battery cells in each battery case. The cooling air circulated through each battery case in the vertical direction enters an upper void in the battery frame and flows from a front side toward a rear side of the battery frame before being discharged out of the air outlet.

### PRIOR ART DOCUMENT

### PATENT DOCUMENT

Patent Document 1: Japanese Laid-Open Patent Publication No. 10-246112

### SUMMARY OF THE INVENTION

### PROBLEMS THAT ARE TO BE SOLVED BY THE INVENTION

In the battery structure of patent document 1, the cooling air is drawn into each battery case from the ventilation passage through the lower vent holes of the battery case. However, before entering the battery cases through the lower vent holes, the cooling air may leak from the ventilation passage into gaps formed between adjacent battery cases or leak into gaps formed between an inner surface of the battery case and outer surfaces of the battery cases. Thus, the cooling air flowing through the ventilation passage cannot be efficiently drawn into the battery case, and the cooling efficiency of the battery cell is low.

It is an object of the present invention to provide a battery pack that efficiently draws operational fluid into the battery case and efficiently adjusts the temperature of the battery cells with the operational fluid.

### MEANS FOR SOLVING THE PROBLEM

To achieve the above object, one aspect of the present invention provides a battery pack including a plurality of battery cases arranged next to each other. Each battery case accommodates a battery cell and includes an inlet, which draws operational fluid into the battery case, and an outlet, which discharges the operational fluid from the battery case. A passage formation member extends along the arrangement direction of the battery cases and is arranged to face the inlet. The passage formation member includes a circulation passage that circulates the operational fluid along the arrangement direction of the battery cases. A plurality of inlet ports guide the operational fluid from the circulation passage to the inlets of the battery cases. A blockade is arranged between adjacent ones of the inlet ports. The blockage blocks a flow of the operational fluid from the circulation passage toward a gap between the battery cases that are adjacent to each other in the arrangement direction. An adhering member adheres to outer surfaces of the battery cases. The adhering member is flexible, adhered to the passage formation member to surround the inlet ports, and integrated with the passage formation member.

### BRIEF DESCRIPTION OF THE DRAWINGS

Fig. 1 is a perspective view showing a battery pack according to one embodiment of the present invention.
Fig. 2 is a plan view showing the interior of the battery pack of Fig. 1.
Fig. 3(a) is a perspective view showing a battery module of Fig. 1, Fig. 3(b) is a side view showing the battery module of Fig. 1, and Fig. 3(c) is a cross-sectional view showing the battery module of Fig. 1 taken along line 3c-3c in Fig. 3(a).
Fig. 4(a) is a partial perspective view showing a first passage formation member of Fig. 1, Fig. 4(b) is a partial perspective view showing a second passage formation member of Fig. 1, and Fig. 4(c) is a partial perspective view showing a discharge passage formation member of Fig. 1.
Fig. 5 is a cross-sectional view taken along line 5-5 of Fig. 1 showing the interior of the battery pack.
Fig. 6 is a schematic view showing an electric vehicle and a battery pack.

### MODE FOR CARRYING OUT THE INVENTION

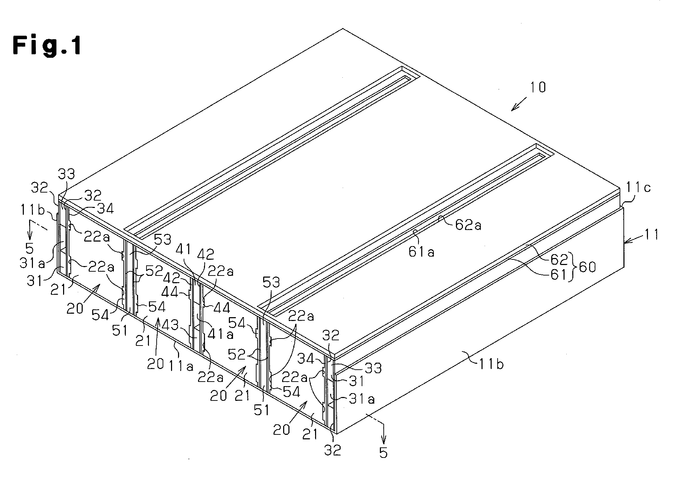

One embodiment of the present invention will now be described with reference to Figs. 1 to 6.

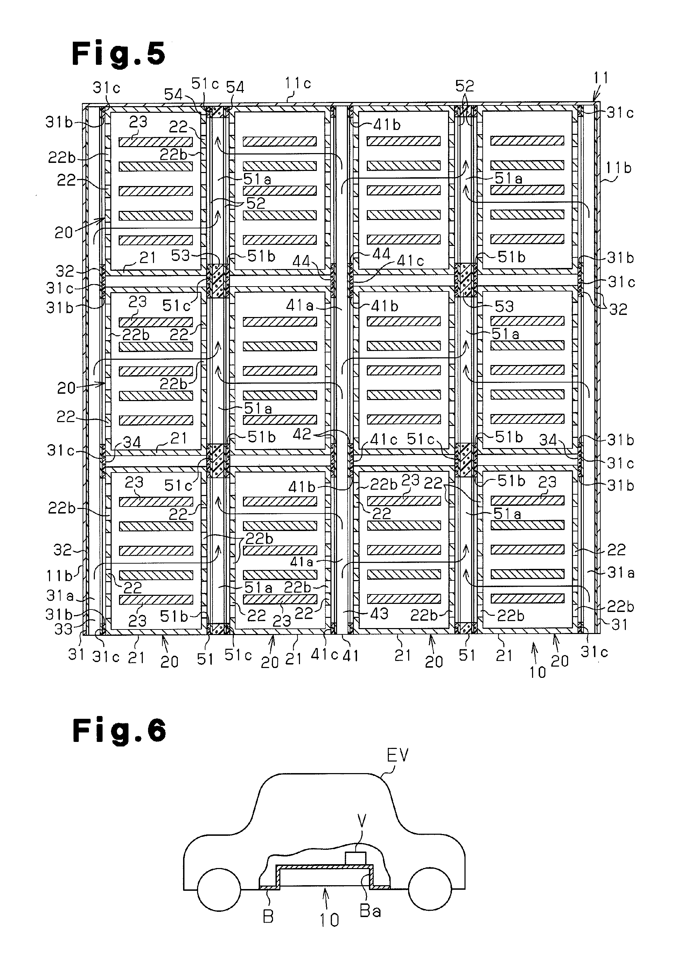

As shown in Fig. 6, a battery 10 is installed in an electric vehicle EV. The electric vehicle EV includes a battery compartment Ba that accommodates the battery pack 10 so that the battery pack 10 can be removed and set from the lower side of a vehicle body B. In the vehicle body B, a blower V, which serves as a drawing mechanism that draws air from the battery pack 10 and allows for a cooling current serving as operational fluid to flow to the battery pack 10, is arranged above the battery compartment Ba.

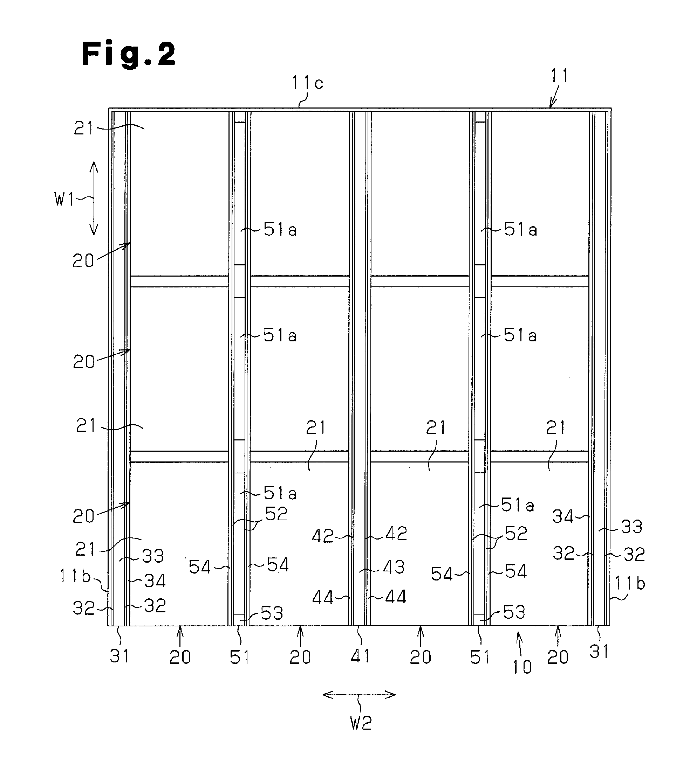

As shown in Figs. 1 and 2, the battery pack 10 includes a box-shaped battery frame 11. The battery frame 11 includes a tetragonal bottom plate 11 a, first side walls 11b extending upright from two opposite sides of the bottom plate 11a, and a second side wall 11c extending upright from one of the remaining sides of the bottom plate 11a. The bottom plate 11a, the first side walls 11b, and the second side wall 11c are formed integrally and form upper and front openings.

Referring to Fig. 2, the battery pack 10 has a box-shaped profile. The battery pack 10 includes a plurality of battery modules 20 arranged along a long side direction indicated by arrow W1 and a short side direction indicated by arrow W2. The battery pack 10 also includes first passage formation members 31, a second passage formation member 41, and discharge passage formation members 51 that are arranged besides the battery modules 20 extending along the long side direction.

The battery module 20 will now be described.

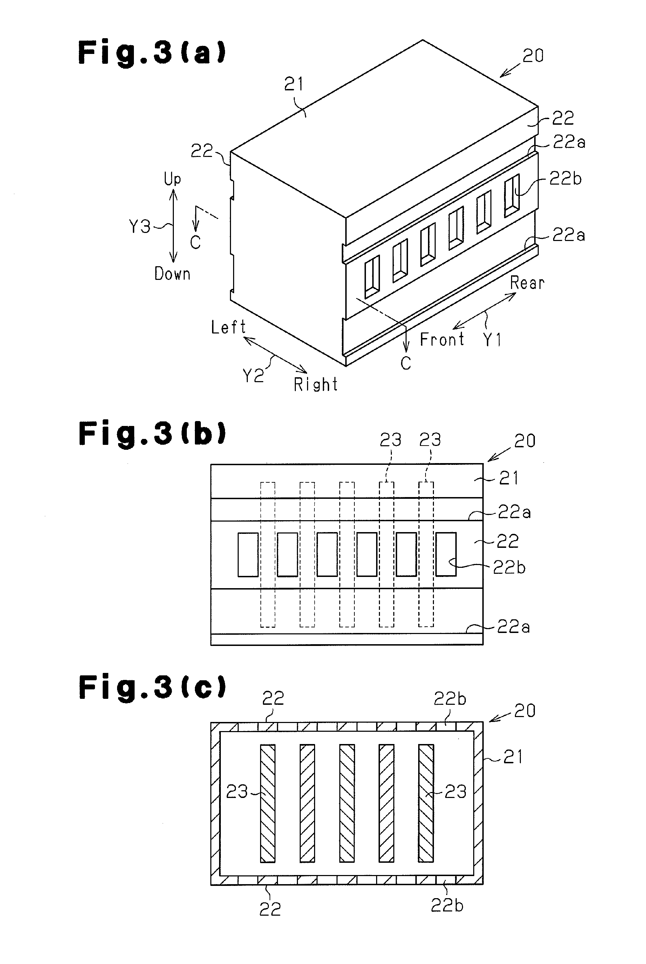

As shown in Figs. 3(a) and 3(b), a battery module 20 includes a battery case 21, which has the form of a square box, and a plurality of battery cells 23, which are accommodated in the battery case 21 in state arranged next to one another. In the battery case 21, the direction in which the plurality of battery cells 23 are arranged is a front to rear direction indicated by arrow Y1 in Fig. 3(a), and the direction orthogonal to the front to rear direction is a lateral direction indicated by arrow Y2 in Fig. 3(a). Further, a direction indicated by arrow Y3 in Fig. 3(a) is a vertical direction of the battery case 21. The battery cells 23 may be any of a number of types including laminate winding cells, cylindrical cells, and rotation winding cells.

The battery case 21 includes two side walls 22, which oppose each other in the lateral direction. Each side wall 22 has an outer surface including two recess grooves 22a, an upper one and a lower one, extending throughout the front to rear direction of the battery case 21. Further, the side wall 22 includes a plurality of ventilation ports 22b formed at equal intervals along the front to rear direction between the upper and lower recess grooves 22a. The ventilation ports 22b formed in the two side walls 22 oppose one another in the lateral direction of the battery case 21.

As shown in Figs. 3(b) and 3(c), the battery cells 23 are arranged in the battery case 21 at positions that do not overlap with the ventilation ports 22b. In other words, the battery cells 23 are arranged in the battery case 21 so that the two left and right end surfaces of each battery cell 23 oppose the inner surfaces of the two side walls 22 and so that each battery cell 23 is not arranged between the opposing ventilation ports 22b in the lateral direction of the battery case 21. Thus, the cooling current that is drawn through first ventilation ports 22b (inlet) into the battery case 21 flows along side surfaces of the battery cells 23 without being interfered by the battery cells 23 in the battery case 21. The cooling current is then discharged out of the battery case 21 from second ventilation ports 22b (outlet).

As shown in Fig. 5, the battery modules 20 of the above structure are arranged so that the battery cells 23 are arranged along the long side direction of the battery pack 10, that is, so that the front to rear direction of each battery case 21 conforms to the long side direction of the battery pack 10. The long side direction of the battery pack 10 is the direction in which the battery cases 21 (battery modules 20) are arranged. In the present embodiment, three battery modules 20 are arranged along the long side direction of the battery pack 10, and four battery modules 20 are arranged along the short side direction. The battery pack 10 thus includes a total of twelve battery modules 20. Slight gaps are formed between the battery cases 21 that are adjacent to each other in the long side direction of the battery pack 10, that is, in the direction in which the battery cases 21 are arranged. Slight gaps are also formed between the battery cases 21 that are adjacent to each other in the short side direction of the battery pack 10.

The first passage formation member 31, the second passage formation member 41, and the discharge passage formation member 51 will now be described.

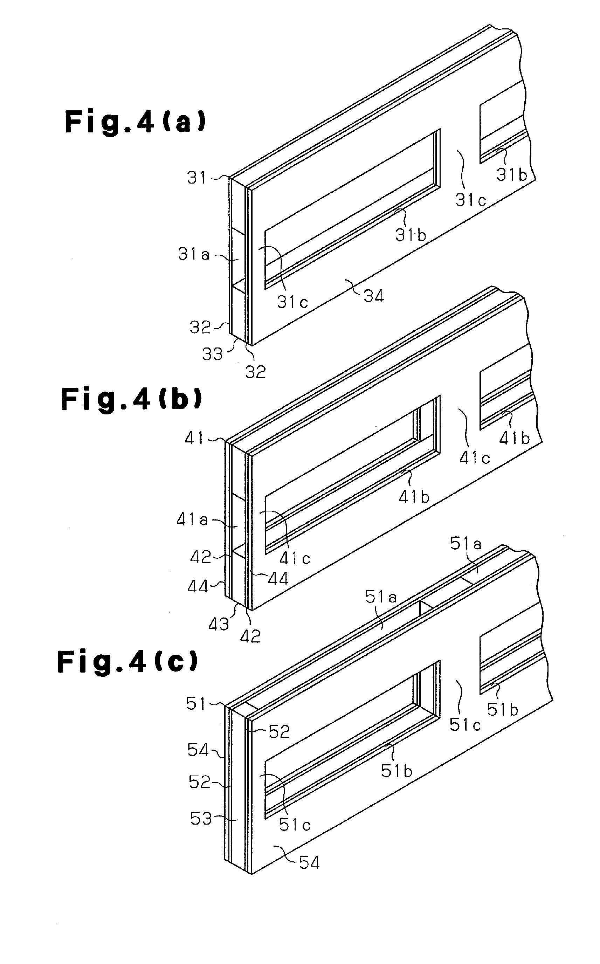

As shown in Figs. 1 and 2, the first passage formation members 31 are arranged the two sides of the battery pack 10 in the short side direction. As shown in Fig. 4(a), the first passage formation member 31 is an elongated plate. The first passage formation member 31 includes two first base plates 32, which are formed from a synthetic resin and has the required rigidity, a first flow passage formation member 33, which is formed by a sponge member and arranged between the first base plates 32, and a first adhering member 34, which is formed by a sponge member, integrated with an outer surface of one of the two first base plates 32, and flexible. The first passage formation member 31 includes a first circulation passage 31 a that extends throughout the entire long side direction of the first flow passage formation member 33.

As shown in Figs. 4(a) and 5, the first passage formation member 31 includes three first inlet ports 31 b arranged at equal intervals. Each first inlet port 31 b is a tetragonal opening, the long side direction of which conforms to the long side direction of the first passage formation member 31. The first inlet port 31b extends through one of the first base plates 32 from the first adhering member 34 and is in communication with the first circulation passage 31a. The first inlet port 31 b communicates the first circulation passage 31 a to the exterior of the first passage formation member 31. First blockades 31c are formed in the first passage formation member 31 at the two ends in the long side direction and between the adjacent first inlet ports 31 b.

As shown in Figs. 2 and 5, the first passage formation members 31 are arranged at the sides of the battery modules 20 so that the long side direction conforms to the direction in which three battery cases 21 are arranged and so that the first adhering members 34 are adhered to the outer surface of the battery cases 21 (outer surfaces of the side walls 22). As shown in Fig. 5, the first adhering members 34 are adhered to the outer surfaces of the side walls 22 so as to surround all of the ventilation ports 22b in the side wall 22 of each battery module 20. More specifically, the first adhering members 34 are adhered to the upper and lower portions of all of the ventilation ports 22b in each side wall 22 including the upper and lower recess grooves 22a. The first adhering members 34 are also adhered to front and rear portions at the two front and rear ends of the side wall 22 of each battery module 20, which are located outward from the ventilation ports 22b.

The second passage formation member 41 will now be described. The second passage formation member 41 is arranged at a central part in the short side direction of the battery pack 10. Three battery modules 20 are arranged on both sides of the second passage formation member 41. As shown in Fig. 4(b), the second passage formation member 41 is an elongated plate. The second passage formation member 41 includes two second base plates 42, which is formed from a synthetic resin having the required rigidity, a second flow passage formation member 43, which is formed by a sponge member and arranged between the second base plates 42, and second adhering members 44, which is formed by sponge members, integrated with outer surfaces of the second base plates 42, and flexible. The second passage formation member 41 includes a second circulation passage 41 a that extends through the entire long side direction of the second flow passage formation member 43.

As shown in Fig. 4(b) and Fig. 5, the second passage formation member 41 includes three second inlet ports 41 b arranged at equal intervals. Each second inlet port 41b has the form of a tetragonal opening, the long side direction of which conforms to the long side direction of the second passage formation member 41. The second inlet port 41 b extends through the second passage formation member 41 in a thicknesswise direction. The second inlet port 41 b communicates the second circulation passage 41 a to the exterior of the two sides of the second passage formation member 41. Second blockades 41c are formed in the second passage formation member 41 at both ends in the long side direction and between the adjacent second inlet ports 41 b.

As shown in Figs. 2 and 5, the second passage formation member 41 is arranged at the sides of the battery modules 20 so that the long side direction conforms to the direction in which the battery cases 21 are arranged and so that the second adhering members 44 are adhered to outer surfaces of the battery cases 21 (outer surfaces of the side wall 22). As shown in Fig. 5, the second adhering members 44 are adhered to the outer surfaces of the side walls 22 so as to surround all of the ventilation ports 22b in the side wall 22 of each battery module 20. More specifically, the second adhering members 44 are adhered to the upper and lower portions of all of the ventilation ports 22b in each side wall 22 including the upper and lower recess grooves 22a. The second adhering members 44 are also adhered to front and rear portions at the two front and rear ends of the side wall 22 of each battery module 20, which are located outward from the ventilation ports 22b.

The discharge passage formation members 51 will now be described. Each discharge passage formation member 51 is arranged between the three battery modules 20 arranged at the outermost side in the short side direction of the battery pack 10 and the adjacent three battery modules 20. As shown in Fig. 4(c), the discharge passage formation member 51 is an elongated plate. The discharge passage formation member 51 includes two base plates 52, which is formed from a synthetic resin having the required rigidity, an interposing member 53, which is formed by a sponge member and arranged between the base plates 52, and adhering members 54, which are formed by sponge members, integrated with outer surfaces of the base plates 52, and flexible.

As shown in Figs. 4(c) and 5, the discharge passage formation member 51 includes three first outlet ports 51 b arranged at equal intervals. Each outlet port 51 b has the form of a tetragonal opening, the long side direction of which conforms to the long side direction of the discharge passage formation member 51. The outlet port 51b extends pass through the discharge passage formation member 51 in a thicknesswise direction. The discharge passage formation member 51 also includes a communication port 51a, which is in communication with the outlet port 51 b and opens in the upper surface of the discharge passage formation member 51. Blockades 51c are formed in the discharge passage formation member 51 at both ends in the long side direction and between the adjacent outlet ports 51 b.

As shown in Figs. 2 and 5, the discharge passage formation members 51 are arranged between columns of the battery modules 20 so that the long side direction conforms to the direction in which the battery cases are arranged, and the two adhering members 54 are adhered to the outer surfaces of the battery cases 21 (outer surfaces of the side walls 22). As shown in Fig. 5, the adhering members 54 are adhered to the outer surfaces of the side walls 22 so as to surround all of the ventilation ports 22b in the side wall 22 of each battery module 20. More specifically, the adhering members 54 are adhered to the upper and lower portions of all of the ventilation ports 22b in each side wall 22 including the upper and lower recess grooves 22a. The adhering members 54 are also adhered to front and rear portions at the two front and rear ends of the side wall 22 of each battery module 20, which are located outward from the ventilation ports 22b.

The battery pack 10 of the above structure is accommodated in the battery frame 11. As shown in Figs. 1 and 2, when the battery pack 10 is accommodated in the battery frame 11, the second side wall 11c closes first open ends of the first circulation passage 31a and a second open end of the second circulation passage 41 a. Second open ends of the first circulation passage 31 a and a second open end of the second circulation passage 41 a are open toward the outer side of the battery frame 11 through the front opening of the battery frame 11.

As shown in Fig. 1, a cover member 60 is arranged above the battery pack 10. The cover member 60 is formed by integrating a tetragonal lower cover plate 61 and a tetragonal upper cover plate 62. The lower cover plate 61 is formed by joining a reinforcement plate (not shown), which is formed from a hard material (metal or resin), with a tetragonal sponge plate. The upper cover plate 62 is also formed by joining a reinforcement plate (not shown), formed from a hard material (metal or resin), with a tetragonal sponge plate. The lower cover plate 61 includes two exhaust grooves 61 a, which are spaced apart from each other toward the two sides in the short side direction and extend in the long side direction of the lower cover plate 61. The exhaust groove 61 a extends through the lower cover plate 61 in a thicknesswise direction. The upper cover plate 62 includes outlet 62a respectively surrounding the exhaust grooves 61a. When the cover member 60 is arranged on the battery pack 10, the exhaust grooves 61a are located above the communication ports 51 a of the discharge passage formation members 51, and the communication ports 51 a are in communication with the exhaust grooves 61 a and the outlets 62a.

Further, when the battery pack 10 is accommodated in the battery compartment Ba, the upper surface of the upper cover plate 62 is adhered to a lower surface of the battery compartment B1, and a discharge passage is formed by the exhaust grooves 61 a and outlets 62a, which are in communication with the communication ports 51 a, between the lower surface of the battery compartment Ba and the cover member 60. The discharge passage is in communication with the blower V (drawing mechanism) on the battery compartment Ba.

The operation of the battery pack 10 will now be described.

When the blower V is driven, air is drawn into the first circulation passage 31 a through the second open ends of the first circulation passages 31a. Air is also drawn into the second circulation passage 41 a through the second open end of the second circulation passage 41 a. The air functions as cooling current. The cooling current flows through the first and second circulation passages 31 a and 41 a from the front to the rear of the battery pack 10 and is prevented from flowing into gaps between the battery cases 21 by the first and second blockades 31c and 41c.

The cooling current in the first and second circulation passages 31 a and 41 a flow from the inlet ports 31 b and 41 b toward the opposing battery cases 21. The cooling current is then drawn into the battery case 21 from the first ventilation ports 22b (inlet) facing the inlet ports 31 b and 41 b. The cooling current drawn into the battery case 21 flows along the side surfaces of the battery cells 23 and is then discharged out of the battery case 21 from the second ventilation ports 22b (outlet) facing the first ventilation ports 22b. The cooling current discharged from the battery case 21 flows into the outlet ports 51 b of the discharge passage formation member 51. Then, the cooling current is drawn through the communication ports 51 a toward the upper side of the battery pack 10. Further, the cooling current drawn from the communication ports 51a is discharge to the outlets 62a through the exhaust grooves 61 a and out of the battery pack 10 by the blower V.

The above embodiment has the advantages described below.
(1) In the battery pack 10, the passage formation members 31 and 41, which are arranged to face the ventilation ports 22b (inlet) of the battery case 21, includes the circulation passages 31 a and 41 a, which allows for the circulation of cooling current, and the inlet ports 31 b and 41 b, which guide the cooling current flowing through the circulation passages 31a and 41 a to the ventilation ports 22b of each battery case 21. The adhering members 34 and 44, which are adhered to the outer surfaces of the battery case 21 (outer surface of the side wall 22), are adhered integrally with the passage formation members 31 and 41. The adhering members 34 and 44 are adhered to the outer surfaces of the battery case 21 so as to surround the ventilation ports 22b of the battery case 21 and absorb ridges and valleys in the outer surfaces of the battery case 21. Thus, the adhering members 34 and 44 prevent the cooling current guided from the circulation passages 31 a and 41 a to the inlet port 31 b and 41 b from leaking into gaps and recesses formed between the outer surface of the battery case 21 and the outer surfaces of the passage formation members 31 and 41. As a result, the arrangement of the adhering members 34 and 44 on the passage formation members 31 and 41 efficiently draws cooling current through the ventilation ports 22b into the battery case 21 and efficiently cools (adjust the temperature of) the battery cells 23.
(2) In the battery pack 10, the passage formation members 31 and 41 arranged at the sides of the battery cases 21 include the blockades 31c and 41 c. The blockades 31 c and 41 c are arranged facing gaps between the battery cases 21 that are arranged adjacent to each other in the arrangement direction. Thus, the blockades 31c and 41c prevent the cooling current flowing through the circulation passages 31 a and 41a from leaking into gaps between the battery cases 21 and allows for the cooling current to flow from the front toward the rear of the circulation passages 31 a and 41 a. Accordingly, the arrangement of the blockades 31c and 41c in the passage formation members 31 and 41 allows for the cooling current to be efficiently drawn through the ventilation port 22b into the battery cases 21 and efficiently cools (adjust the temperature of) the battery cells 23.
(3) The passage formation members 31 and 41 are respectively formed by integrating the base plates 32 and 42, the flow passage formation members 33 and 43, which are arranged between the base plates 32 and 42, and the adhering members 34 and 44 adhered to the base plates 32 and 42. The base plates 32 and 42 have the required rigidity. Thus, the adhering members 34 and 44 deform and absorb ridges and valleys in the outer surface of the battery case 21, and the base plates 32 and 42 suppress deformation of the adhering members 34 and 44 caused by ridges and valleys in the outer surface of the battery case 21. This allows for the adhering members 34 and 44 to be adhered to the outer surface of the battery case 21.
(4) The passage formation members 31 and 41 includes the flow passage formation member 33 and 43 between the base plates 32 and 42 and are formed by integrating the adhering members 34 and 44 to the sides of the base plates 32 and 42 that contact the battery case 21. Thus, even when the adhering members 34 and 44 are deformed when absorbing ridges and valleys, the base plates 32 and 42 prevent deformation of the flow passage formation member 33 and 43. As a result, the circulation passages 31a and 41a defined in the flow passage formation members 33 and 43 are prevented from being crushed by the base plates 32 and 42. This ensures an effective passage cross-sectional area for cooling air.
(5) In the passage formation members 31 and 41, the circulation passages 31a and 41a are formed by sandwiching the flow passage formation members 33 and 43, which includes passages extending entire in the long side direction, with the base plates 32 and 42 from both sides. The base plates 32 and 42 are thin plates and have light weights. Accordingly, for example, when forming the circulation passages 31a and 41a having the same flow passage cross-sectional area with only the flow passage formation members 33 and 43, the flow passage formation member 33 and 43 would be thick and heavy. In this manner, the formation of the circulation passages 31 a and 41 a with the flow passage formation members 33 and 43 and the base plate 32 and 42 decreases the weight of the passage formation members 31 and 41.
(6) The adhering member 34, 44, and 54, which contact the outer surfaces of the battery cases 21, are integrated with the passage formation members 31 and 41 and the discharge passage formation member 51. The adhering member 34, 44, and 54 are formed by sponge members. Thus, the adhering members 34, 44, and 54 protect the battery case 21.
(7) The adhering members 34, 44, and 54 adhered to the outer surfaces of the battery cases 21 are integrated with the passage formation members 31 and 41 and the discharge passage formation member 51. The adhering members 34, 44, and 54 serves as a heat retention material and a heat insulating material for the battery cell 23 in cold regions or the like.
(8) The passage formation members 31 and 41 and the discharge passage formation member 51 can form cooling current passages of various shapes by combining the base plates 32, 42, and 52, the adhering members 34, 44, and 54, the flow passage formation members 33 and 43, and the interposing member 53. This forms a desired passage for cooling current in the battery pack 10.
(9) The discharge passage formation members 51 include the outlet ports 51 b, into which cooling current discharged from the ventilation port 22b (outlet) of the battery case 21 flows, and the communication ports 51 a, which are in communication with the outlet ports 51 b. The cooling current is drawn from the communication ports 51a through the exhaust grooves 61a and the outlets 62a of the cover member 60 by the blower V and discharged out of the battery pack 10. Thus, the arrangement of the discharge passage formation members 51 allows for the air drawn by the blower V to flow from the front toward the rear of the battery pack 10 so that cooling current is efficiently circulated through the circulation passages 31 a and 41 a.
(10) The discharge passage formation members 51 include the integrally arranged adhering members 54 that contact the outer surfaces of the battery cases 21. The adhering members 54 adhere to the outer surface of the side walls 22 so as to surround all of the ventilation ports 22b (outlet) in the side walls 22 of the battery cases 21 and absorbs ridges and valleys in the side wall 22. Thus, the adhering members 54 suppresses the leakage of the cooling current discharged from the battery case 21 into gaps and recesses between the outer surfaces of the side walls 22 of the battery cases 21 and the outer surfaces of the discharge passage formation members 51. This allows for the cooling current to be efficiently circulated through the circulation passages 31 a and 41 a.

The above embodiment may be modified as described below.

In the above embodiment, each first passage formation member 31 is formed by the two first base plates 32, the first flow passage formation member 33, and the first adhering member 34. However, the first passage formation member 31 may be formed in the following manner without using the first base plates 32 and the first flow passage formation member 33. A tetragonal plate may include a through-hole extending through the plate along a long side direction so that the through-hole forms the first circulation passage 31 a. The first inlet ports 31 b are then formed in the thicknesswise direction of the plate in communication with the first circulation passage 31 a. Further, in the plate, the first adhering member 34 is integrated with the outer surface side of the battery case 21.

In the above embodiment, the second passage formation member 41 is formed by the two second base plates 42, the second flow passage formation member 43, and the second adhering member 44. However, the second passage formation member 41 may be formed in the following manner without using the second base plates 42 and the second flow passage formation member 43. A tetragonal plate may include a through-hole extending through the plate along a long side direction so that the through-hole forms the second circulation passage 41a. The second inlet ports 41b are then formed in the thicknesswise direction of the plate in communication with the second circulation passage 41 a. Further, in the plate, the second adhering member 44 is integrated with the outer surface side of the battery case 21.

In the embodiment, the discharge passage formation member 51 is formed by the two discharge passage formation members 51, the interposing member 53, and the adhering member 54. However, the discharge passage formation member 51 may be formed in the following manner without using the discharge passage formation members 51 and the interposing member 53. A tetragonal plate may include the outlet port 51 b, which extends through the plate material along a thicknesswise direction, and the communication port 51 a, which is formed in communication with the outlet port 51 b. Further, in the plate, the adhering member 54 is integrated with the outer surface side of the battery case 21.

In the above embodiment, the operational fluid is embodied as cooling current that performs temperature adjustment (cooling) of the battery cell 23. However, the operational fluid may be embodied as warming current that performs temperature adjustment by warming the battery cell 23.

In the above embodiment, the operational fluid is embodied as gas (cooling current). However, the operational fluid may be embodied as liquid.

In the above embodiment, the base plates 32, 42, and 52 are formed from a synthetic resin. However, the material of the base plates 32, 42, and 52 may be changed to ceramics, wood, metal, or the like as long as the required rigidity is obtained. The flow passage formation members 33 and 43 are formed by sponge members. However, the material of the flow passage formation members 33 and 43 may be changed to foam polystyrene, rubber, metal, wood, ceramics, or the like as long as effective flow passage cross-sectional areas can be ensured for the circulation passage 31a and 41a. Further, the adhering member 34, 44, and 54 are formed from sponge member. However, the material of the adhering members 34, 44, and 54 may be changed to nonwoven cloth, rubber, or the like as long as the material is flexible and can adhere to the outer surface of the battery case 21 to suppress the leakage of the cooling current.

In the above embodiment, the battery pack 10 is installed in the electric vehicle EV that uses the battery modules 20 as a power source. However, the battery pack 10 may be installed in a hybrid vehicle that uses the engine and the battery modules 20 as a power source.

The circulation passages 31 a and 41 a may be changed to any shape so that the cooling current efficiently flows to the desired location.

In the above embodiment, the blower V is used to have the cooling current flow from the front toward the rear of the battery pack 10. However, the location of the blower V may be changed to change the flowing direction of the cooling current.

In the above embodiment, two columns of battery modules 20 are sandwiched between the first passage formation member 31 and the second passage formation member 41, and the discharge passage formation member 51 is arranged between theses columns of battery modules 20. As a result, cooling current flows from the passage formation members 31 and 41 toward the discharge passage formation member 51 to discharge the cooling current from the discharge passage formation member 51. However, the locations of the passage formation members 31 and 41 and the discharge passage formation member 51 may be changed. For example, two columns of the battery modules 20 may be sandwiched by the first passage formation member 31 and the discharge passage formation member 51 so that the cooling current from the first passage formation member 31 is drawn toward the two columns of the battery cases 21 and so that the cooling current discharged from the battery cases 21 are discharged from the discharge passage formation member 51. The number of columns of the battery modules 20 sandwiched between the first passage formation member 31 and the discharge passage formation member 51 may be changed to three or four, and the discharge passage formation member 51 may be arranged at any position.

In the above embodiment, the cooling current flowing through the battery case 21 is discharged from the battery pack 10 through the outlet ports 51 b and the communication ports 51 a of the discharge passage formation member 51. However, the cooling current flowing through the battery case 21 may be discharged from the ventilation ports 22b without using the discharge passage formation member 51.

The number of battery modules 20 that are arranged in the direction in which the battery cases 21 are arranged (long side direction of the battery pack 10) may be changed in any manner. In this case, the length in the long side direction of the first and second passage formation members 31 and 41 is changed in accordance with the number of battery modules 20 in the arrangement direction, and the number of first and second inlet ports 31 b and 41 b is also changed in accordance with the number of battery modules 20.

In the above embodiment, the battery case 21 accommodates the battery cells 23 and includes the ventilation ports 22b. The battery case 21 may accommodate only one battery cell 23 and include only two ventilation ports 22b faced to each other in the lateral direction of the battery case 21. Alternatively, only one battery cell 23 may be accommodated in the battery case 21 and sets of two ventilation ports 22b faced to each other in the lateral direction of the battery case 21.

In the above embodiment, the ventilation ports 22b are formed on the left and right side walls 22 of the battery case 21. Further, the first passage formation members 31, the second passage formation members 41, and the discharge passage formation member 51 are arranged at the side of the battery case 21. However, this may be changed as described below. The ventilation ports 22b may be formed on the upper surface and the lower surface of each battery case 21. Further, the first passage formation member 31, the second passage formation member 41, and the discharge passage formation member 51 may be arranged above and below the battery case 21.

## Claims

1. A battery pack comprising:
a plurality of battery cases arranged next to each other, wherein each battery case accommodates a battery cell and includes an inlet, which draws operational fluid into the battery case, and an outlet, which discharges the operational fluid from the battery case; and
a passage formation member that extends along the arrangement direction of the battery cases and is arranged to face the inlet, wherein the passage formation member includes
a circulation passage that circulates the operational fluid along the arrangement direction of the battery cases,
a plurality of inlet ports that guide the operational fluid from the circulation passage to the inlets of the battery cases,
a blockade arranged between adjacent ones of the inlet ports, wherein the blockage blocks a flow of the operational fluid from the circulation passage toward a gap between the battery cases that are adjacent to each other in the arrangement direction, and
an adhering member that adheres to outer surfaces of the battery cases, wherein the adhering member is flexible, adhered to the passage formation member to surround the inlet ports, and integrated with the passage formation member.

2. The battery pack according to claim 1, wherein the passage formation member includes two base plates, a flow passage formation member arranged between the two base plates, and the adhering member, which is integrated with one of the two base plates that faces the battery cases.

3. The battery pack according to claim 1 or 2, wherein the adhering member is formed by a sponge member.

4. The battery pack according to any one of claims 1 to 3, wherein the base plate is formed from a synthetic resin.

5. The battery pack according to any one of claims 1 to 4, further comprising
a discharge passage formation member extending along the arrangement direction of the battery cases facing the outlets, wherein the discharge passage formation member includes
a plurality of outlet ports into which the operational fluid discharged from the outlet flows, and
a plurality of communication ports that are in communication with the outlet ports and discharge the operational fluid from the outlet ports,
wherein a drawing mechanism is in communication with the communication ports through a discharge passage.

6. The battery pack according to claim 5, wherein
the adhering member is a first adhering member,
the discharge passage formation member includes two base plates, an interposing member, which is arranged between the two base plates, and a second adhering member, which is adhered to and integrated with one of the two base plates that faces the battery cases; and
the second adhering member is flexible and adhered to outer surfaces of the battery cases surrounding the outlets.

7. The battery pack according to claim 6, wherein the second adhering member is formed by a sponge member.

8. The battery pack according to claim 6 or 7, wherein the base plates of the discharge passage formation member are formed from a synthetic resin.

9. The battery pack according to any one of claims 1 to 8, wherein the operational fluid is cooling current.

10. The battery pack according to any one of claims 1 to 9, wherein the battery pack is installed in an electric vehicle or a hybrid vehicle.
